# EUROPEAN PATENT SPECIFICATION

(11) **EP 4 132 804 B1**
(45) Date of publication and mention of the grant of the patent: **12.02.2025**
(21) Application number: 21717059.6
(22) Date of filing: 07.04.2021
(51) Int. Cl.: B60G 7/00, B60G 9/00, B60G 11/46, F16F 1/18

(54) **FORGED FLEXIBLE TRAILING ARM HAVING AN OMEGA SHAPED CROSS SECTION**
GESCHMIEDETER FLEXIBLER SCHLEPPARM MIT OMEGA-FÖRMIGEM QUERSCHNITT
BRAS OSCILLANT FLEXIBLE FORGÉ AYANT UNE SECTION TRANSVERSALE EN OMÉGA

(30) Priority: 10.04.2020 NL 2025334
(43) Date of publication of application: 15.02.2023
(73) Proprietor: VDL Weweler B.V., 7325 WC Apeldoorn (NL)
(72) Inventor: BRUINJA, Marten, Frank, Ciarán, 7545 VV ENSCHEDE (NL); SCHRIER, Tom, 7323 TE APELDOORN (NL); HENDRIKS, Michel, 7381 BL Klarenbeek (NL)
(74) Representative: EP&C
(86) International application number: PCT/EP2021/058984
(87) International publication number: WO 2021/204829

(56) References cited:
- EP-A1- 1 728 654
- EP-B1- 1 728 654
- WO-A1-2009/014423
- WO-A1-2017/118771
- WO-A1-2017/160502
- DE-A1- 10 055 859
- DE-A1- 102014 117 207

## Description

The present invention relates to a forged flexible trailing arm for an air sprung wheel axle suspension of a vehicle, said trailing arm being made of spring steel and having a front end portion adapted and configured to be pivotally mounted to a chassis bearing bracket, an axle attachment portion located at a longitudinal distance from the front end portion and adapted to attach an axle body against, and a spring portion extending between the front end portion and the axle attachment portion and formed integrally therewith.

Air sprung wheel axle suspensions having flexible trailing arms are typically used in heavy utility vehicles such as trucks, trailers and semi-trailers. The trailing arms must have a sufficient bending stiffness in the height direction and also in the width direction, and torsional stiffness to resist torsional loads.

EP 1728654 A1 shows an example of a forged trailing arm. The arm portion of this trailing arm between the front end portion and the axle attachment portion has a generally X-section profile with four limbs.

DE 10055859 A1 shows a forged flexible trailing arm. The arm portion between the front end portion and axle attachment portion has a generally H-shaped cross-section.

WO 2009/014423 A1 discloses forged flexible trailing arms. The spring portion of these known trailing arms has a rectangular cross section.

It is an object of the present invention to provide a more lightweight trailing arm, which fulfils the strength and stiffness requirements for heavy vehicles such as trucks, trailers and semi-trailers.

This object is achieved by a forged flexible trailing arm for an air sprung wheel axle suspension of a vehicle, said trailing arm being made of spring steel and having a front end portion adapted and configured to be pivotally mounted to a chassis bearing bracket, an axle attachment portion located at a longitudinal distance from the front end portion and adapted to attach an axle body against, and a spring portion extending between the front end portion and the axle attachment portion and formed integrally therewith, wherein the spring portion comprises a channel shaped profile having a top wall having a wall thickness (*tₜ*)*,* two opposing lateral walls, having a wall thickness (*tₗ*), and an open side opposite the top wall and facing downwardly in use, and the spring portion furthermore comprising outwardly extending lateral ridges formed at the end of the lateral walls flanking the open side of the channel shaped profile.

The cross-sectional shape of the spring portion as described above results in that the spring portion has substantially what may be called "an Omega shaped cross section" along its length. It was found that by the Omega shape a trailing arm could be made with a sufficient bending stiffness in height direction and in width direction, as well as a sufficient torsional stiffness, while at the same time the weight is considerably reduced. In some occasions the weight may be half in comparison with the trailing arms disclosed in WO 2009/014423.

In a preferred embodiment of the trailing arm according to the invention the lateral ridges have a height (*tᵣ*) defined by the distance between an upper side and a lower side of the ridge, which height (*tᵣ*) is larger than the wall thicknesses (*tₜ, tₗ*) of the top wall and the lateral walls. This height in combination with the total width of the channel profile allows the transverse forces to be absorbed in the lateral ridges and makes the trailing arm strong enough in the transverse direction.

The spring portion has a neutral axis which adjacent the front end portion is located at the level of an upper side of the lateral ridges and which in longitudinal direction develops continuously to a level substantially in the middle of the height of the channel shaped profile adjacent the attachment portion.

In a possible embodiment the ratio between the wall thickness of the top wall (*tₜ*) and the wall thickness (*tₗ*) of the lateral walls is within the range 0,90 ≤ *tₗ*/ *tₜ* ≤ 1,60.

In a possible embodiment the lateral ridge has a maximum width (*wᵣ*) from the inner side of the lateral wall at the open side to a most outward lateral point of the lateral ridge, which maximum width (*wᵣ*) is larger than the wall thicknesses (*tₜ*) of the top wall.

In a preferred embodiment the lateral walls extend under an angle with the top wall of at least 90°, preferably between 96° and 102°. The non-perpendicular angle between the top wall and the lateral walls improve the release of the trailing arm from the forging die.

In a preferred embodiment the lateral ridges have an outer lateral side which tapers from the upper side of the lateral ridge towards the lower side of the lateral ridge. The angle may be 96° in a practical embodiment. The tapering lateral sides between the upper side and the lower side of the ridges improve the release of the trailing arm from the forging die.

In a possible embodiment of the trailing arm according to the invention an axle seat is integrally formed in the axle attachment portion for receiving a longitudinal section of the axle body. In this embodiment the axle body can be arranged directly against the axle seat of the trailing arm. An intermediate part such as an axle pad may not be necessary, although it is conceivable to arrange an intermediate part, such as a shell in the axle seat, for example to adapt for a smaller diameter or for a particular shape of the axle body.

In a possible embodiment the attachment portion has a channel shaped profile having outwardly extending lateral ridges formed at an open end of the channel shaped profile, such that the attachment portion has substantially an Omega shaped cross section along its length. In this embodiment the spring portion and the attachment portion of the trailing arm thus have adjoining channel shaped profiles, which provides a more light weight trailing arm design.

In a possible embodiment of the trailing arm according to the invention the spring portion has a varying width profile, preferably a curved width profile.

More in particular the outer lateral sides of the lateral ridges may define a first varying width profile, which is preferably a curved profile.

Furthermore the outer sides of the lateral walls may define a second varying width profile, which is preferably a curved profile.

In a transitional portion between the spring portion and the attachment portion of a further embodiment of the trailing arm, the second width profile is smaller than in the spring portion in front thereof.

In a possible further embodiment one or more transverse ribs are formed between the lateral walls at the front end of the attachment portion. These ribs extend on the inside between the lateral walls and are formed against the inner side of the top wall, and they prevent that the lateral walls are bent inwardly when the front end is tightened to an axle body by a tightening set of bolts or a U-bolt.

In a possible embodiment the front end of the attachment portion has indents formed on the outer side in the edge between the top wall and the lateral walls of the channel profile. These indents are configured and designed for supporting a rear end of a so called strap plate, which is used as a counter element for tightening the shanks of bolts or a U-bolt. The strap plate rests on an upper side of the trailing arm and has bores through which the shanks can pass. The shanks have a threaded portion on which a nut can be screwed which finally abuts the strap plate whereby the shanks of the bolts or U-bolt can be tensioned.

In a preferred embodiment the forging edge, i.e. the edge formed at the interface between forging die halves during manufacturing, is located at a level of the lateral ridges, in particular at the level of the upper side of the lateral ridges. This forging edge may be an irregular edge of which the shape cannot be accurately controlled. By locating this edge closer to the neutral axis, and thus not at the level of the lower side, there is less risk of fracturing at this forging edge.

In one possible embodiment of the trailing arm according to the invention the trailing arm includes a rear arm portion integral with the attachment portion, which rear arm portion comprises an air spring mounting portion. Such a trailing arm may have an integral axle seat but may also be combined with an intermediate part having an axle seat to be arranged between the axle body and the axle attachment portion of the trailing arm. Such an intermediate part may be a so called axle pad.

In a possible embodiment the intermediate part has at a front end thereof, at the location of the tensioning link, upwardly extending protrusions which engage on an inner side of the lateral ridges of the trailing arm. These protrusions support the lateral walls and the lateral ridges from the inside which prevents deformation inwardly thereof when the tensioning link is tensioned.

Alternatively the trailing arm may be part of a two-part trailing arm assembly. Such a trailing arm assembly comprises an embodiment of the trailing arm without an integral rear arm portion, and furthermore comprising a separate rear arm part including an attachment portion having an axle seat to be positioned opposite the attachment portion of the trailing arm, and an air spring mounting arm which extends from the attachment portion of the rear arm part, wherein in use the attachment portion of the trailing arm and the attachment portion of the rear arm part receive an axle body and are clamped against it by a tensioning link like a U-bolt or separate bolts. Preferably the attachment portion of the trailing arm and the attachment portion of the rear arm part engage each other at a front end of the respective attachment portions and are clamped against each other in a deadlock.

Preferably the attachment portion of the rear arm part has at a front end, at the location of the shanks of the U-bolt or the separate bolts, upwardly extending protrusions which engage on an inner side of the lateral ridges of the trailing arm. These protrusions laterally support the lateral ridges and prevent the lateral ridges and lateral walls to be deformed inwardly by the tightening of the U-bolt or separate bolts.

The invention furthermore relates to a wheel axle suspension comprising a trailing arm or a trailing arm assembly according to any of the preceding claims the wheel axle suspension furthermore comprising a strap plate having ears with respective bores for the shanks of a U-bolt or separate bolts, wherein the strap plate in a mounted state extends over the upper side of the trailing arm and is supported by the lateral ridges at a front end of the axle attachment portion.

In a possible further embodiment the strap plate at a front end region thereof does not engage the top wall of the channel shaped profile of the spring portion.

In yet a further embodiment the strap plate at a rear end region thereof engages the top wall of the channel shaped profile of the axle attachment portion.

The invention furthermore relates to a method for manufacturing a trailing arm as described in any of the foregoing, wherein:
- a cylindrical rod shaped blank is arranged in a first forging die;
- the cylindrical blank is deformed to an intermediate workpiece by compression in the first forging die;
- the intermediate workpiece is arranged in a second forging die;
- the intermediate workpiece is deformed to the final shape of the trailing arm by compression in the second forging die.

The invention will be elucidated in the following detailed description with reference to the drawings, in which:
Fig. 1 shows a view in perspective from above of an embodiment of a trailing arm according to the invention,
Fig. 2 shows a top elevational view of the trailing arm of Fig. 1,
Fig. 3 shows a view in perspective from below of the trailing arm of Fig. 1,
Fig. 4 shows a bottom elevational view of the trailing arm of Fig. 1,
Fig. 5 shows a side elevational view of the trailing arm of Fig. 1,
Figs. 6A, 6B, 6C and 6D show a cross section through the sections A-A, B-B, C-C and D-D, respectively, indicated in Fig. 5,
Fig. 6E shows an enlarged view of the cross section through the line B-B indicated in Fig. 5,
Fig. 7 shows a view in perspective from above of a trailing arm assembly including the trailing arm of Fig. 1,
Fig. 8 shows a side elevational view of the trailing arm assembly of Fig. 7,
Fig. 9 shows a cross sectional view according to the section E-E as indicated in Fig. 8,
Fig. 10 shows a view in perspective from below of the trailing arm assembly of Fig. 7 clamped on an axle body,
Fig. 11 shows another view in perspective from above of the trailing arm assembly of Fig. 7 clamped on an axle body,
Fig. 12 illustrates in a view in perspective an air sprung wheel axle suspension including the trailing arm assembly of Fig. 10 and 11,
Fig. 13 shows a side elevational view of the wheel axle suspension of Fig. 12,
Fig. 14 shows in a view in perspective a further embodiment of a trailing arm according to the invention,
Fig. 15 shows a longitudinal sectional view of the trailing arm of Fig. 14,
Fig. 16 shows in a view in perspective from above another embodiment of a trailing arm according to the invention,
Fig. 17 shows the trailing arm of Fig. 16 in a view in perspective from below, and
Fig. 18 shows the trailing arm of Fig. 16 clamped to an axle body.

Air sprung wheel axle suspensions are mainly designed to be applied in utility vehicles such as trucks, trailers and semi-trailers. In particular in trailers and semi-trailers the use of air sprung wheel axle suspensions, also shortly referred to as "air suspensions" is widespread. Such wheel axle suspensions comprise in general on each side of the vehicle a bearing bracket which is attached to the vehicle chassis, a trailing arm which, at a front end thereof, is pivotally connected to the bearing bracket and which extends with a longitudinal axis thereof in the longitudinal direction of the vehicle. An axle body of wheel axle extends in transverse direction of the vehicle and is attached to the corresponding trailing arms on either side of the vehicle. Furthermore the air suspension comprises an air spring, which supports the vehicle chassis, and which is mounted to the trailing arm or another part connected to the axle body at a sufficient distance from the pivoting front end of the trailing arm.

Depending on the design of the air suspension the trailing arms for utility vehicles such as trucks, trailers and semi-trailers may be divided generally in two types: rigid and in flexible trailing arms.

Flexible trailing arms have a spring portion which is designed to allow elastic bending during normal operation and thereby absorb static and dynamic loads on the axle suspension. The spring portion of flexible trailing arms is for example important to counteract roll movements of the vehicle during normal operation thereof.

The present invention relates to flexible trailing arms.

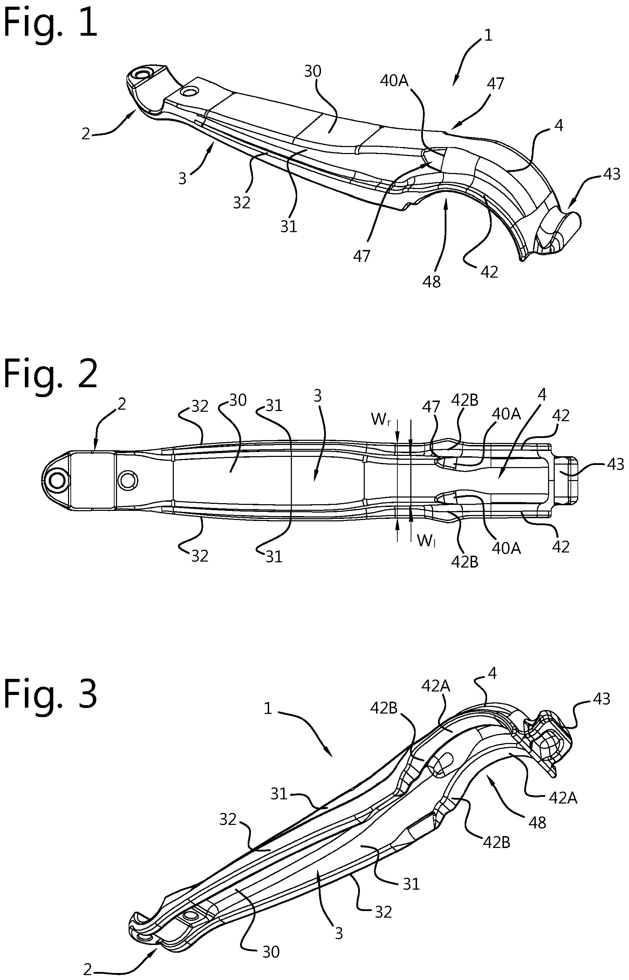

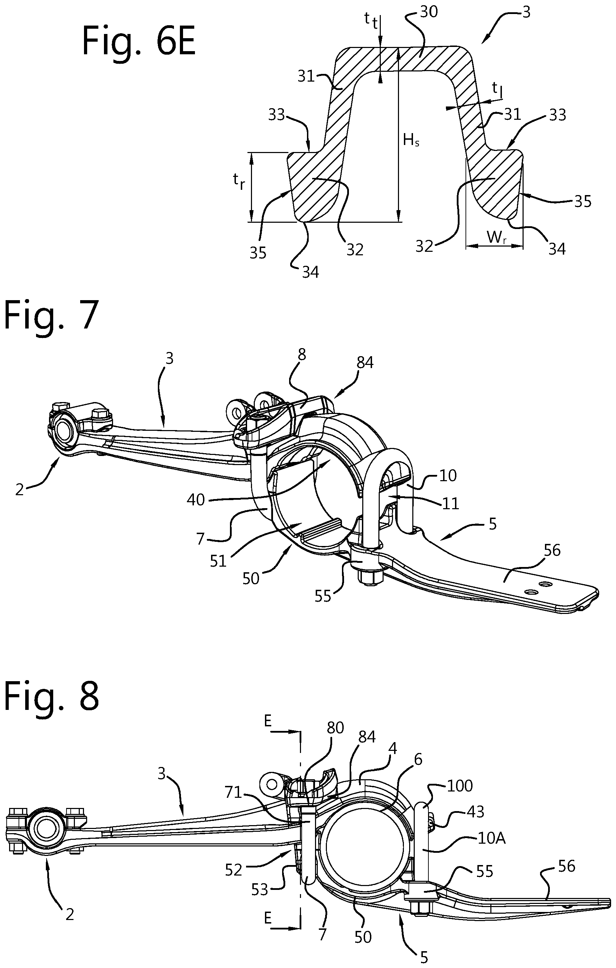

In Figs. 1-5 is shown a possible embodiment of a trailing arm according to the invention. This specific embodiment of the trailing arm is intended to be combined with a rear arm part as is shown in Figs 7,8 10 and 11 into a trailing arms assembly as will be described in more detail further below.

The trailing arm is indicated by reference numeral 1. The trailing arm 1 is made in one piece by forging from a suitable spring steel grade. The trailing arm 1 comprises basically three portions: a front end portion 2, a spring portion 3 and an axle attachment portion 4. It has an elongate shape having a longitudinal axis from the front end portion 2 towards the axle attachment portion 4.

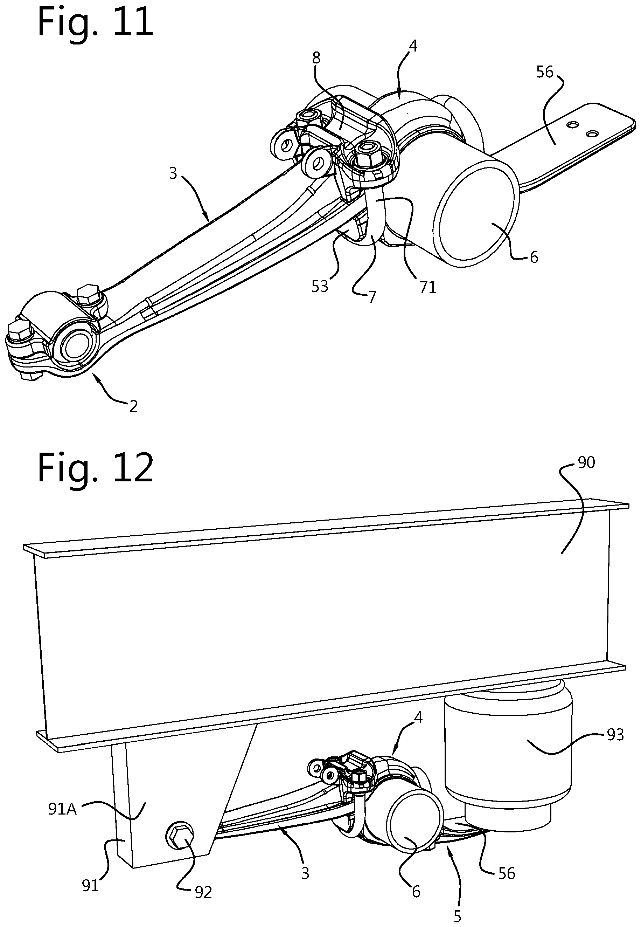

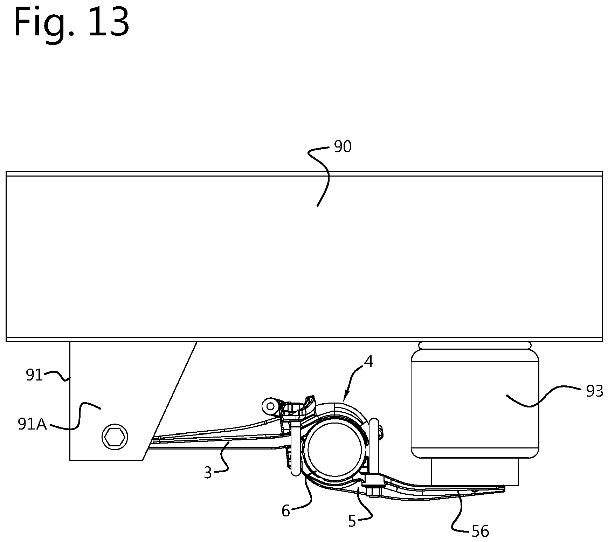

The front end portion 2 is configured to be pivotally connected to a bearing bracket of a vehicle chassis as is illustrated in Figs. 12 and 13, and will be described in more detail further below. The front end portion 2 of the trailing arm 1 comprises a half eyelet, which can form an eyelet with an opposite separate eyelet part. The eyelet is for the pivotal connection of the trailing arm 1 with the bearing bracket. It should be noted here that the two-part eyelet form as shown in the figures is only an option and that it is very well possible to form an entire eyelet at the front or to form another pivoting structure at the front end portion such as integral journal pins as is described in WO 2020/060393 of the of the same applicant as the present applicant.

The spring portion 3 adjoins the front end portion 2 and extends longitudinally rearward. The spring portion 3 is designed to bend elastically such that it can absorb static and dynamic loads.

The spring portion 3 has a channel shaped profile which is open at a bottom side, as can be best seen in Fig. 3 and in the cross section of Fig. 6E. The channel shaped profile has a top wall 30 and lateral walls 31.

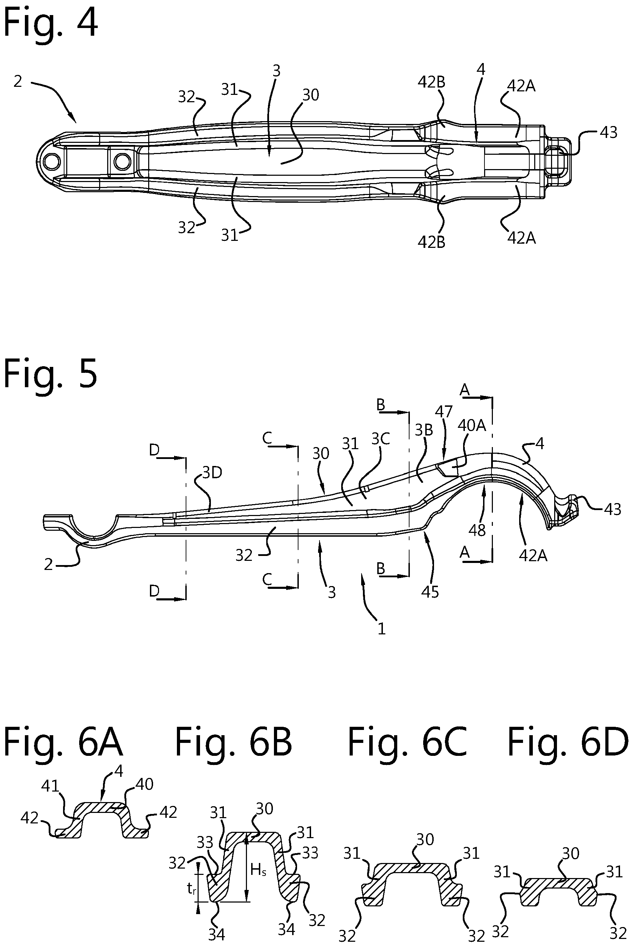

The lateral walls 31 have a proximal end which is connected to the top wall 30. Furthermore, the lateral walls 31 have a distal end at the open side of the channel profile. At the distal end of the lateral walls 31 are formed thickened portions. The thickened portions protrude outwardly with respect to the outer surface of the lateral walls 31 and thereby form lateral ridges 32. From the cross sections of Fig. 6 one might say that the cross section of the spring portion 3 has a sort of Omega shape, which is most pronounced in the cross sections of Fig. 6B and 6C.

The top wall has a thickness *tₜ.* The lateral walls have thickness *tₗ.* The ratio between the wall thickness of the top wall *tₜ* and the wall thickness *tₗ* of the lateral walls of the spring portion is not constant but varies along the longitudinal axis. Varying along the length the ratio lies within the range 0,90 ≤ *tₗ*/ *tₜ* ≤ 1,60, wherein the ratio 0,9 is at the front of the spring portion and the ratio 1,6 is near the rear end of the spring portion 3.

The lateral ridges 32 have an upper side 33 and a lower side 34. The distance between the upper side 33 and the lower side 34 defines a thickness *tᵣ.* This thickness *tᵣ* is larger than the thickness *tₗ* of the lateral walls 31 and the thickness *tₜ* of the top wall 30.

The lateral ridge 32 has a maximum width *wᵣ* from the inner side of the lateral wall 31 at the open side to a most outward lateral point of the lateral ridge 32. This maximum width *wᵣ* is larger than the wall thicknesses *tₜ* of the top wall 30.

In the cross sections shown in Fig. 6B to 6D is visible that the lateral walls 31 extend under an angle larger than 90° with respect to the top wall 30. In a practical embodiment this may be an angle in the range of 96° to 102°, whereby the profile may be readily releasable from the forging die it is formed in.

The lateral ridges 32 have an outer lateral side 35 which tapers from the upper side 33 of the lateral ridge 32 towards the lower side 34 of the lateral ridge.

When the trailing arm 3 is forged, the separation surface between the forging dies lies at the level of the upper side 33 of the lateral ridges 32. The tapering lateral walls 31 and the tapering lateral sides 35 facilitates the release of the workpiece from the forging die.

As is best visible in Figs. 2 and 4 the spring portion 3 has a varying width profile. In particular the outer lateral sides 35 of the lateral ridges 32 have a first varying width profile, which in this specific embodiment is a curved profile. The outer sides of the lateral walls 31 define a second varying width profile, which in this specific embodiment is a curved profile. The first and second width profiles may be partly parallel to each other, whereby the lateral ridges have a constant width. However, in the embodiment shown towards the rear end of the spring portion 3, the second width profile is more constricted than the first width profile. In other words the width between the lateral walls 31 narrows more than the width between the outer sides 35 of the lateral ridges, whereby the upper side 33 of the lateral ridges becomes a wider surface. This wider surface can conveniently be used for supporting a strap plate as will be described further below.

As mentioned, the present embodiment the spring portion has in particular a curved width profile. In other embodiments the width profile may be different, e.g. a linear width profile.

In this embodiment the top wall 30 has no curvature around the longitudinal axis as is best visible in Fig. 6E. Also the lateral walls 31 have no curvature around the longitudinal axis.

The spring portion 3 has a varying height *Hₛ* (cf. Fig. 6E) which is smallest adjacent the front end portion 2 and increases in the longitudinal direction as can be best seen in the side view of Fig. 5 and the cross sections of Figs 6B-D. The increasing height of the spring portion 3 in the present embodiment has partially a curved profile and partially a linear profile. In particular if the width is substantially constant the height profile may be curved, in a particular embodiment parabolic. When the width is varying the height profile may be linear.

It is also conceivable to design the spring portion with another height profile, e.g. a parabolic height profile, in which the height decreases according to a parabolic function in a longitudinal direction from the axle attachment portion towards the front end portion. A parabolic height profile provides a variable bending stiffness along the length of the spring portion, wherein the largest stiffness just in front of the axle attachment portion of the trailing arm. A parabolic shape may be advantageous in some trailing arm designs, e.g. when the spring portion is designed with a constant width. In that case the tension in the spring portion is substantially constant over the length upon bending of the spring portion of the trailing arm.

The spring portion 3 has a neutral axis which adjacent the front end portion 2 is located at the level of the upper side 33 of the lateral ridges 32 and which in longitudinal direction develops continuously to a level substantially in the middle of the height of the channel shaped profile adjacent the attachment portion 4.

During normal operation of the vehicle the front end portion 2 of the trailing arm 3 may move downwardly and upwardly with respect to the roadsurface due to roll movements of the vehicle. When the front end portion 2 moves down, a lower part of the spring portion 3, located underneath the neutral axis, is compressed and an upper part of the spring portion 3, located above the neutral axis, is stretched. When the front end portion 2 moves upwardly, the upper part of the spring portion 3 is compressed and the lower part of the spring portion 3 is stretched. The stresses in the spring portion are lower in the latter situation, because part of the upwardly directed forces is absorbed by the air spring.

The material of the trailing arm can resist a higher compressive stress than tensile stress. Furtheremore, the stress levels in the spring portion 3 are higher when the front end portion 2 moves downwardly than when it moves upwardly. These properties are advantageously used in designing the trailing arm 1 of the invention: by reducing the amount of material in the spring portion 3, in particular in the lower part thereof, the total weight of the trailing arm 1 is reduced while the stress levels in spring portion 3 are maintained within safe boundaries.

All the mentioned form factors (i.e. varying height profile, varying width profiles of lateral walls and lateral ridges, wall thicknesses) provide a varying bending stiffness over the length of the spring portion, wherein the highest stiffness is at the rear end of the spring portion which is necessary due to the largest distance from the pivot point at the front end portion 2 of the trailing arm 1.

The axle attachment portion 4 is formed with an integral axle seat 48 for receiving a longitudinal section of the axle body as can be best seen in Figs 8, 10 and 11. The axle attachment portion 4 comprises a curved channel shaped profile having outwardly extending lateral ridges 42 formed at an open end of the channel shaped profile. The curvature is around a transverse axis, such that it can receive a round axle body that extends in the transverse direction of the vehicle and thus from the trailing arm 1. This can be best seen in Fig. 8. The channel profile has a sort of Omega shaped cross section which is best seen in Fig. 6A. The axle body engages the concave underside 42A of the lateral ridges 42, which constitutes the actual axle seat engagement surface.

The axle attachment portion 4 has generally a constant width, as is best seen in Fig. 4. At the front end region of the axle seat the ridges 42 have a wider portion 42B. This is because at the front end region of the axle seat 48 the forces will be the highest when an axle is clamped in the seat.

At a rear end of the axle attachment portion 4 a console 43 is formed. The console 43 is configured to receive the bend portion of a U-bolt as will be explained with reference to Figs. 7 and 8.

Instead of the console 43 designed for receiving a U-bolt, it is also possible to from one or more consoles including a bore through which a bolt or a shank of a U-bolt can be passed, such that the axle attachment portion 4 of the trailing arm 1 and an axle attachment portion of a rear arm part (see also below), can be clamped together by one or more bolts or the shanks of a U-bolt.

The trailing arm 1 is intended for assembly with a rear arm part 5 as is shown in Figs.7, 8 10-11 to form a "trailing arm assembly". The rear arm part 5 is advantageously a cast part, but may also be a forged part. The rear arm part 5 has a function in clamping the axle body against the trailing arm 1, and it has a function in providing a mount for the air spring as will become clear in the following.

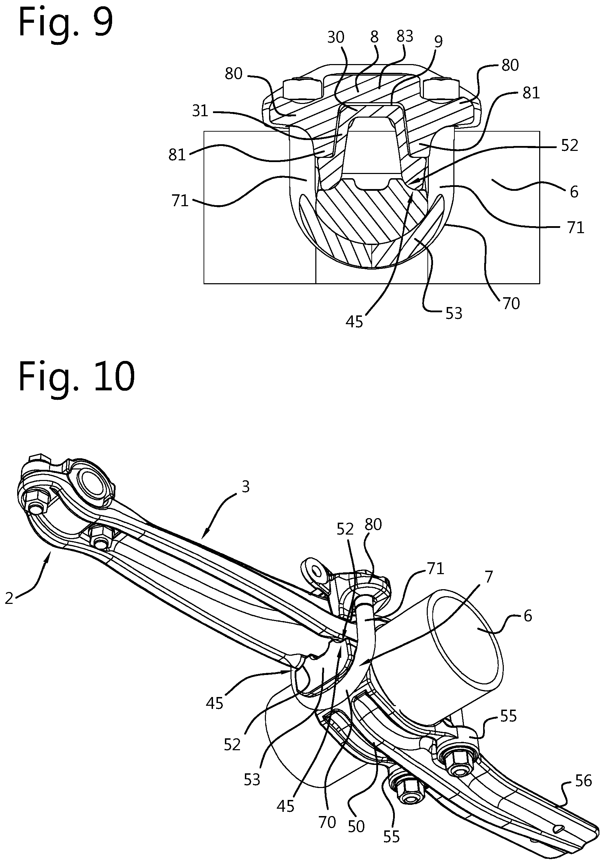

The rear arm part 5 has an axle attachment portion 50 with an axle seat 51 formed in it which is positioned opposite the axle attachment portion 4 of the trailing arm 1. A tubular axle body 6 is received in the axle seat 51 of the rear arm part 5 and in the axle seat 48 of the trailing arm 1. At the front end of the axle attachment the axle attachment portion 4 and the axle attachment portion 50 are in abutment with each other at respective abutment surfaces 45 and 52 (cf. Figs. 9 and 10).

The axle attachment portion of the rear arm part 5 has a console 53 formed at the front end for receiving a bend portion 70 of a front U-bolt 7. The U-bolt 7 has shanks 71 which extend upwardly along the lateral side of the lateral ridges 32.

A strap plate 8 is arranged on top of the trailing arm 1 at the front end of the axle attachment. The strap plate 8 is a sort of bridge shaped part as can be seen in Fig. 9. The strap plate 8 has ears 80 with bores for passing through the shanks 71 of the U-bolt 7. Furthermore the strap plate has downwardly extending piles 81 which rest on the upper side 33 of the lateral ridges. The main plate body 83 of the strap plate extends over the top wall 30 of the channel shaped profile, but does not touch it. As is shown in Fig. 9 there is a gap 9 between the main plate body 83 and the top wall 30. Furthermore there is also a gap between the piles 81 and the outer surface of lateral walls 31 of the channel shaped profile.

At the location where the strap plate 8 is arranged the spring portion has a reduced width. The width wᵣ between the lateral ridges 32 is reduced, and the width wₗ between the lateral walls 31 is even more reduced compared to the lateral ridges 32 and the later walls 31 in the spring portion 3 in front thereof. This is best visible in the top elevational view of Fig. 2. Thus a wider support surface for the piles 81 of the strap plate 8 is created. It is noted that in this region of the trailing arm 1 the height of the channel shaped profile is at its maximum whereby the bending stiffness is increased. This is necessary because at that specific region of the trailing arm the loads will be at their maximum due to the largest distance from the pivot point of the trailing arm 1.

The strap plate 8 has a rear end portion 84 (cf. Fig. 7-8) which rests on the lateral walls of the axle attachment portion. Thereto the edges between the top wall 40 and lateral walls 41 of the axle attachment portion 4 have a bevelled surface portion 40A forming indents 47 in the edge. The strap plate thus rests on the bevelled surface portions 40A at the indents 47.

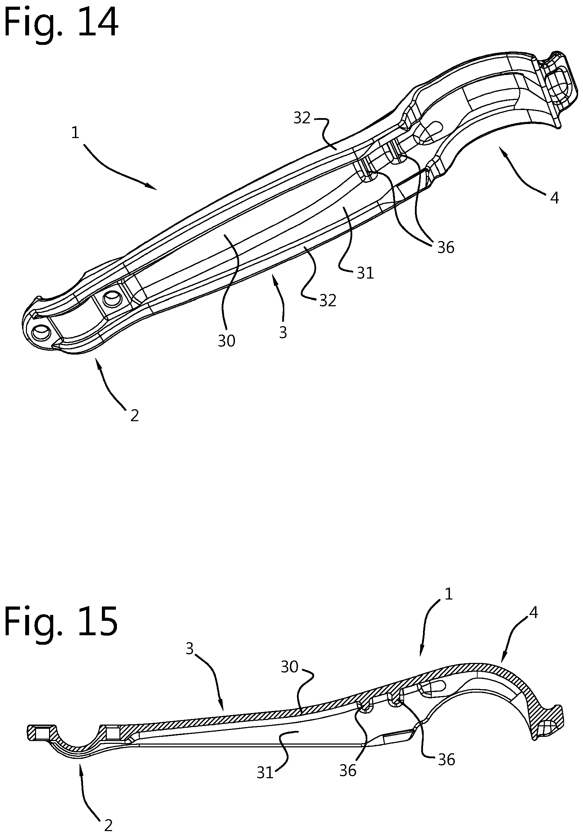

In Figs. 14 and 15 is shown a slightly different embodiment of the trailing arm 1 as is shown in Figs. 1-5. In this embodiment there are formed two transverse ribs 36 on the inner side of the top wall 30. The ribs 36 extend between the inner sides of the lateral walls 31 and integrally adjoin the lateral walls 31, 41. The ribs 36 are located at the clamping region at the front end of the attachment portion 4, which adjoins the rear end of the spring portion 3. The ribs 36 support the lateral walls 31, 41 and prevent that the lateral walls 31, 41 are bent inwardly when the trailing arm 1 is clamped to an axle body 6 by the U-bolt 7.

At the rear of the axle attachment, a second U-bolt 10 is applied to tighten the rear end of the axle attachment portions 4 and 50 together. The rear end of the axle attachment portions 4 and 5 do not engage each other, thus a gap 11 is left between them. The U-bolt 10 has a bend portion 100 which is received on the console 43. The rear arm part 5 has ears 55 formed rearward of the axle seat 51. The ears 55 have a bore for passing through the shanks 10A of the U-bolt 10.

The rear arm part 5 furthermore comprises an air spring mounting arm 56 which extends from the attachment portion 50 of the rear arm part 5.

In Figs. 12 and 13 is shown how the trailing arm assembly is mounted to the vehicle chassis. A bearing bracket 91 is attached to a chassis beam 90. The bearing bracket 91 comprises two lateral support plates 91A including a bore for passing through a pivot bolt 92. The pivot bolt 92 extends through the eyelet of the trailing arm 1. An air spring 93 is mounted to the air spring mounting arm 56 of the rear arm part 5. The upper end of the air spring 93 supports the chassis beam 90 and is preferably attached thereto.

The rear arm part 5 is a one piece part in the embodiment shown in the figures 7, 8, 10 and 11. The air spring arm 56 is integrally formed with the axle attachment portion 50 of the rear arm part 5. However, it is also conceivable that the rear arm part is an assembled part comprising an axle attachment portion and an air spring arm which are connected, e.g. bolted, together. This provides the option to make the orientation of the air spring arm variable with respect to the longitudinal direction of the trailing arm, which allows to mount air springs with variable offset positions in lateral direction.

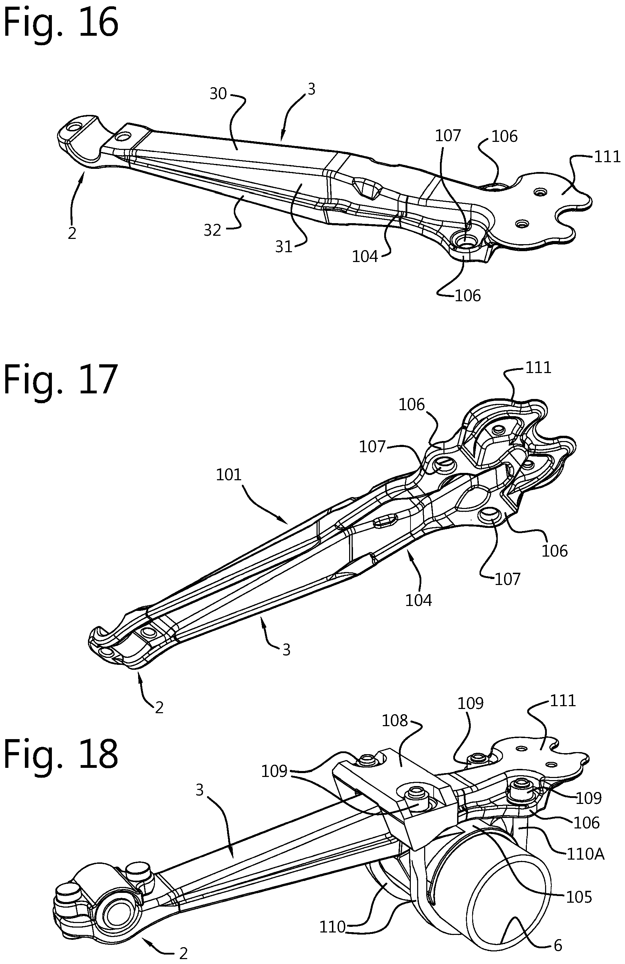

In Figs 16-18 is shown another embodiment of a trailing arm. This trailing arm is indicated with reference numeral 101. The trailing arm 101 has a front end portion 2 and a spring portion 3 similar to the trailing arms 1 described in the foregoing. For a detailed description of those parts referral is made to the foregoing parts of the description.

The trailing arm 101 has an axle attachment portion 104. The axle attachment portion 104 is adapted for mounting an intermediate part against it. The intermediate part is a so called axle pad 105 which includes an axle seat for receiving a longitudinal section of the axle body 6 as is illustrated in Fig. 18. At a rear end of the axle attachment portion 104 two ears 106 are formed which have a bore 107 for passing through the rear shanks 110A of U-bolts 110. At a front end of the axle attachment portion 104 a strap plate 108 is arranged, which may be similar to the strap plate 80 in the foregoing description. Two U-bolts 110 are arranged around the axle body 6 on either lateral side of the trailing arm 101, which, together with corresponding nuts 109 tighten the axle body 6, the axle pad 105 and the axle attachment portion 104 of the trailing arm 101 together.

At a front end of the axle pad 105 at the location of the U-bolts 110, upwardly extending protrusions may be formed which engage on an inner side of the lateral ridges 32 of the trailing arm 101. These protrusions laterally support the lateral ridges 32 and prevent the lateral ridges 32 and lateral walls 31 to be deformed inwardly by the tightening of the U-bolts 110.

The trailing arm 101 has an air spring mounting portion 111 integrally formed with the axle attachment portion. In this specific embodiment the axle attachment portion 111 is located adjacent the axle attachment portion 104, such that the air spring is mounted partly above the axle body 6.

The trailing arm 101 provides a longitudinally very compact construction. Other embodiments are also conceivable in which the rear trailing arm portion is extended towards the rear such that the air spring mounting portion is more distanced from the axle body. The rear trailing arm portion may even be bended to a sort of crank shape, such that the height level of the air spring mounting portion may be changed, e.g. lowered.

The trailing arms 1, 101 are made by a forging process wherein a cylindrical rod shaped blank is arranged in a first forging die. The blank is made of suitable grade of spring steel. In a practical example the blank may have a length of about 690 mm and a diameter of 55 mm. The initially cylindrical blank is deformed to an intermediate workpiece by compression in the first forging die. Then the intermediate workpiece is arranged in a second forging die, in which the intermediate workpiece is deformed to the final shape of the trailing arm 1, 101 by compression.

## Claims

1. Forged flexible trailing arm (1; 101) for an air sprung wheel axle suspension of a vehicle, said trailing arm (1) being made of spring steel and having a front end portion (2) adapted and configured to be pivotally mounted to a chassis bearing bracket, an axle attachment portion (4; 104) located at a longitudinal distance from the front end portion (2) and adapted to attach an axle body (6) against, and a spring portion (3) extending between the front end portion (2) and the axle attachment portion (4; 104) and formed integrally therewith, **characterized in that** the spring portion (3) comprises a channel shaped profile having a top wall (30) having a wall thickness (*tₜ*), two opposing lateral walls (31), having a wall thickness (*tₗ*), and an open side opposite the top wall (30) and facing downwardly in use, and the spring portion (3) furthermore comprising outwardly extending lateral ridges (32) formed at the end of the lateral walls (31) flanking the open side of the channel shaped profile.

2. Forged flexible trailing arm according to claim 1, wherein the lateral ridges (32) have a height (*tᵣ*) defined by the distance between an upper side (33) and a lower side (34) of the ridge, which height (*tᵣ*) is larger than the wall thicknesses (*tₜ, tₗ*) of the top wall (30) and the lateral walls (31).

3. Forged flexible trailing arm according to claim 1 or 2, wherein the spring portion (3) has a neutral axis which adjacent the front end portion (2) is located at the level of an upper side (33) of the lateral ridges (32) and which in longitudinal direction develops continuously to a level substantially in the middle of the height of the channel shaped profile adjacent the attachment portion (4; 104).

4. Forged flexible trailing arm according to any of the preceding claims, wherein:
- the ratio between the wall thickness (*tₜ*) of the top wall (30) and the wall thickness (*tₗ*) of the lateral walls (31) of the spring portion (3) is within the range 0,90 ≤ *tₗ* / *tₜ ≤* 1,60; and/or
- the lateral ridge (32) has a maximum width (*wᵣ*) from the inner side of the lateral wall (31) at the open side to a most outward lateral point of the lateral ridge (32), which maximum width (*wᵣ*) is larger than the wall thicknesses (*tₜ*) of the top wall (30); and/or
- the lateral walls (31) extend under an angle with the top wall (30) of at least 90°, preferably between 96° and 102°.

5. Forged flexible trailing arm according to any of the claims 2-4, wherein the lateral ridges (32) have an outer lateral side (35) which tapers from the upper side (33) of the lateral ridge (32) towards the lower side (34) of the lateral ridge (32).

6. Forged flexible trailing arm according to any of the preceding claims, wherein:
- an axle seat (48) is integrally formed in the axle attachment portion (4) for receiving a longitudinal section of the axle body (6); and/or
- the axle attachment portion (4) has a channel shaped profile having outwardly extending lateral ridges (42) formed at an open end of the channel shaped profile, wherein, preferably, the front end of the attachment portion (4) has indents (47) formed on the outer side in the edge between the top wall (40) and the lateral walls (41) of the channel profile.

7. Forged flexible trailing arm according to any of the preceding claims, wherein:
- the spring portion (3) has a varying width profile, wherein, preferably, the spring portion (3) has a curved width profile; and/or
- the outer lateral sides of the lateral ridges (32) define a first varying width profile, wherein, preferably, the first varying width profile is a curved profile; and/or
- outer sides of the lateral walls (31) define a second varying width profile, wherein, preferably:
• the second varying width profile is a curved profile, and/or
• in a transitional portion located between the spring portion (3) and the attachment portion (4) the second width profile is smaller than in the spring portion (3) in front thereof.

8. Forged flexible trailing arm according to any of the preceding claims, wherein:
- the front end region of the axle attachment portion (4) is wider than the remainder of the attachment portion (4); and/or
- at the front end of the attachment portion (4) one or more transverse ribs (36) are formed inside the profile between the lateral walls.

9. Forged flexible trailing arm according to any of the preceding claims, wherein the forging edge, i.e. the edge formed at the interface between forging die halves during manufacturing, is located at a level of the lateral ridges (32), in particular at the level of the upper side (33) of the lateral ridges (32).

10. Forged flexible trailing arm according to any of the preceding claims, wherein the trailing arm (101) includes a rear arm portion integral with the attachment portion (104), which rear arm portion comprises an air spring mounting portion (111).

11. Trailing arm assembly comprising a trailing arm (1) according to any of the claims 1-9 and furthermore comprising a rear arm part (5) including an attachment portion (50) having an axle seat (51) to be positioned opposite the attachment portion (4) of the trailing arm (1), and an air spring mounting arm (56) which extends from the attachment portion (50) of the rear arm part (5), wherein in use the attachment portion (4) of the trailing arm (1) and the attachment portion (50) of the rear arm part (5) receive an axle body (6) and are clamped against it by means of a tensioning link like a U-bolt (7, 10) or separate bolts.

12. Trailing arm assembly according to claim 11, wherein:
- the attachment portion (4) of the trailing arm (1) and the attachment portion (50) of the rear arm part (5) engage each other at a front end of the respective attachment portions (4, 50) and are clamped against each other in a deadlock, and/or
- the attachment portion (50) of the rear arm part (5) has at a front end, at the location of the tensioning link (7), upwardly extending protrusions which engage on an inner side of the lateral ridges (32) of the trailing arm (1).

13. Wheel axle suspension comprising a trailing arm or a trailing arm assembly according to any of the preceding claims, the wheel axle suspension furthermore comprising a strap plate (8) having ears (80) with respective bores for the shanks (71) of a U-bolt (7) or separate bolts, wherein the strap plate (8) in a mounted state extends over the upper side of the trailing arm (1) and is supported by the lateral ridges (32) at a front end of the axle attachment portion (4).

14. Wheel axle suspension according to claim 13, wherein the strap plate (8) at a front end region thereof does not engage the top wall (30) of the channel shaped profile of the spring portion (3), wherein, preferably, the strap plate (8) at a rear end region thereof engages the top wall of the channel shaped profile of the axle attachment portion (4), in particular at the indents (47) as defined in claim 6.

15. Wheel axle suspension comprising a trailing arm according to claim 10 and furthermore comprising an intermediate part (105) arranged between the axle body (6) and the axle attachment portion (104) of the trailing arm (101), wherein, preferably, the intermediate part (105) has at a front end, at the location of the tensioning link (110), upwardly extending protrusions which engage on an inner side of the lateral ridges (32) of the trailing arm (101).

16. Method for manufacturing a trailing arm (1; 101) according to any of the claims 1-10, wherein:
- a cylindrical rod shaped blank is arranged in a first forging die;
- the cylindrical blank is deformed to an intermediate workpiece by compression in the first forging die;
- the intermediate workpiece is arranged in a second forging die;
- the intermediate workpiece is deformed to the final shape of the trailing arm (1; 101) by compression in the second forging die.

## Patentansprüche

1. Geschmiedeter flexibler Längslenker (1; 101) für eine luftgefederte Radachsaufhängung eines Fahrzeugs, wobei der Längslenker (1) aus Federstahl besteht und einen vorderen Endabschnitt (2), der dazu ausgelegt und konfiguriert ist, schwenkbar an einem Fahrgestelllagerbügel montiert zu sein, einen Achsbefestigungsabschnitt (4; 104), der sich in einem Längsabstand von dem vorderen Endabschnitt (2) befindet und dazu ausgelegt ist, einen Achskörper (6) daran zu befestigen, und einen Federabschnitt (3), der sich zwischen dem vorderen Endabschnitt (2) und dem Achsbefestigungsabschnitt (4; 104) erstreckt und integral damit ausgebildet ist, aufweist, **dadurch gekennzeichnet, dass** der Federabschnitt (3) ein kanalförmiges Profil umfasst, das eine obere Wand (30) mit einer Wandstärke (*tₜ*), zwei gegenüberliegende Seitenwände (31) mit einer Wandstärke (*tₗ*) und eine offene Seite, die der oberen Wand (30) gegenüberliegt und im Gebrauch nach unten weist, aufweist, und wobei der Federabschnitt (3) ferner sich nach außen erstreckende seitliche Rippen (32) aufweist, die an denEnden der Seitenwände (31) ausgebildet sind und die offene Seite des kanalförmigen Profils flankieren.

2. Geschmiedeter flexibler Längslenker nach Anspruch 1, wobei die seitlichen Rippen (32) eine Höhe (*tᵣ*) aufweisen, die durch den Abstand zwischen einer Oberseite (33) und einer Unterseite (34) der Rippe definiert ist, wobei die Höhe (*tᵣ*) größer ist als die Wandstärken (*tₜ, tₗ*) der oberen Wand (30) und der Seitenwände (31).

3. Geschmiedeter flexibler Längslenker nach Anspruch 1 oder 2, wobei der Federabschnitt (3) eine neutrale Achse aufweist, die sich angrenzend an den vorderen Endabschnitt (2) an der Ebene einer Oberseite (33) der seitlichen Rippen (32) befindet und die sich in Längsrichtung kontinuierlich bis zu einer Ebene entwickelt, die sich im Wesentlichen in der Mitte der Höhe des kanalförmigen Profils angrenzend an den Befestigungsabschnitt (4; 104) befindet.

4. Geschmiedeter flexibler Längslenker nach einem der vorhergehenden Ansprüche, wobei:
- das Verhältnis zwischen der Wandstärke (*tₜ*) der oberen Wand (30) und der Wandstärke (*tₗ*) der Seitenwände (31) des Federabschnitts (3) im Bereich von 0,90 ≤ *tₗ* / *tₜ* ≤ 1,60 liegt; und/oder
- die seitliche Rippe (32) eine maximale Breite (*wᵣ*) von der Innenseite der Seitenwand (31) an der offenen Seite zu einem äußersten seitlichen Punkt der seitlichen Rippe (32) aufweist, wobei die maximale Breite (*wᵣ*) größer ist als die Wandstärken (te) der oberen Wand (30); und/oder
- sich die Seitenwände (31) in einem Winkel zu der oberen Wand (30) von mindestens 90°, vorzugsweise zwischen 96° und 102° erstrecken.

5. Geschmiedeter flexibler Längslenker nach einem der Ansprüche 2-4, wobei die seitlichen Rippen (32) eine seitliche Außenseite (35) aufweisen, die sich von der Oberseite (33) der seitlichen Rippe (32) zur Unterseite (34) der seitlichen Rippe (32) hin verjüngt.

6. Geschmiedeter flexibler Längslenker nach einem der vorhergehenden Ansprüche, wobei:
- ein Achssitz (48) in dem Achsbefestigungsabschnitt (4) zur Aufnahme eines Längsbereichs des Achskörpers (6) integral ausgebildet ist; und/oder
- der Achsbefestigungsabschnitt (4) ein kanalförmiges Profil mit sich nach außen erstreckenden seitlichen Rippen (42) aufweist, die an einem offenen Ende des kanalförmigen Profils ausgebildet sind, wobei vorzugsweise das vordere Ende des Befestigungsabschnitts (4) Einbuchtungen (47) aufweist, die auf der Außenseite in der Kante zwischen der oberen Wand (40) und den Seitenwänden (41) des Kanalprofils ausgebildet sind.

7. Geschmiedeter flexibler Längslenker nach einem der vorhergehenden Ansprüche, wobei:
- der Federabschnitt (3) ein variierendes Breitenprofil aufweist, wobei vorzugsweise der Federabschnitt (3) ein gekrümmtes Breitenprofil aufweist; und/oder
- die seitlichen Außenseiten der seitlichen Erhöhungen (32) ein erstes variierendes Breitenprofil definieren, wobei vorzugsweise das erste variierende Breitenprofil ein gekrümmtes Profil ist; und/oder
- Außenseiten der Seitenwände (31) ein zweites variierendes Breitenprofil definieren, wobei vorzugsweise:
• das zweite variierende Breitenprofil ein gekrümmtes Profil ist, und/oder
• in einem zwischen dem Federabschnitt (3) und dem Befestigungsabschnitt (4) liegenden Übergangsabschnitt das zweite Breitenprofil kleiner ist als in dem Federabschnitt (3) davor.

8. Geschmiedeter flexibler Längslenker nach einem der vorhergehenden Ansprüche, wobei:
- der vordere Endbereich des Achsbefestigungsabschnitts (4) breiter ist als der Rest des Befestigungsabschnitts (4); und/oder
- am vorderen Ende des Befestigungsabschnitts (4) eine oder mehrere Querrippen (36) innerhalb des Profils zwischen den Seitenwänden ausgebildet sind.

9. Geschmiedeter flexibler Längslenker nach einem der vorhergehenden Ansprüche, wobei sich die Schmiedekante, d. h. die Kante, die an der Grenzfläche zwischen Schmiedewerkzeughälften während der Herstellung ausgebildet wird, an einer Ebene der seitlichen Rippen(32), insbesondere an der Ebene der Oberseite (33) der seitlichen Rippen (32) befindet.

10. Geschmiedeter flexibler Längslenker nach einem der vorhergehenden Ansprüche, wobei der Längslenker (101) einen hinteren Lenkerabschnitt umfasst, der mit dem Befestigungsabschnitt (104) integral ist, wobei der hintere Lenkerabschnitt einen Luftfedermontageabschnitt (111) umfasst.

11. Längslenkeranordnung, die einen Längslenker (1) nach einem der Ansprüche 1-9 umfasst und ferner einen hinteren Lenkerteil (5), der einen Befestigungsabschnitt (50) mit einem Achssitz (51) umfasst, der gegenüber dem Befestigungsabschnitt (4) des Längslenkers (1) positioniert werden soll, und einen Luftfedermontagearm (56) umfasst, der sich von dem Befestigungsabschnitt (50) des hinteren Lenkerteils (5) erstreckt, wobei im Gebrauch der Befestigungsabschnitt (4) des Längslenkers (1) und der Befestigungsabschnitt (50) des hinteren Lenkerteils (5) einen Achskörper (6) aufnehmen und mittels eines Spannverbindungselements wie eines U-Bolzens (7, 10) oder separater Bolzen an diesen geklemmt sind.

12. Längslenkeranordnung nach Anspruch 11, wobei:
- der Befestigungsabschnitt (4) des Längslenkers (1) und der Befestigungsabschnitt (50) des hinteren Lenkerteils (5) an einem vorderen Ende der jeweiligen Befestigungsabschnitte (4, 50) einander in Eingriff nehmen und in einer Verklemmung aneinander gespannt sind, und/oder
- der Befestigungsabschnitt (50) des hinteren Lenkerteils (5) an einem vorderen Ende, an der Position des Spannverbindungselements (7), sich nach oben erstreckende Vorsprünge aufweist, die auf einer Innenseite der seitlichen Rippen (32) des Längslenkers (1) in Eingriff kommen.

13. Radachsaufhängung, die einen Längslenker oder eine Längslenkeranordnung nach einem der vorhergehenden Ansprüche umfasst, wobei die Radachsaufhängung ferner eine Halteplatte (8) mit Ösen (80) mit jeweiligen Bohrungen für die Schäfte (71) eines U-Bolzens (7) oder separater Bolzen umfasst, wobei sich die Halteplatte (8) in einem montierten Zustand über die Oberseite des Längslenkers (1) erstreckt und durch die seitlichen Rippen (32) an einem vorderen Ende des Achsbefestigungsabschnitts (4) gestützt wird.

14. Radachsaufhängung nach Anspruch 13, wobei die Halteplatte (8) an einem vorderen Endbereich davon nicht die obere Wand (30) des kanalförmigen Profils des Federabschnitts (3) in Eingriff nimmt, wobei vorzugsweise die Halteplatte (8) an einem hinteren Endbereich davon die obere Wand des kanalförmigen Profils des Achsbefestigungsabschnitts (4), insbesondere an den Einbuchtungen (47) nach Anspruch 6 in Eingriff nimmt.

15. Radachsaufhängung, die einen Längslenker nach Anspruch 10 umfasst und ferner einen Zwischenteil (105) umfasst, das zwischen dem Achskörper (6) und dem Achsbefestigungsabschnitt (104) des Längslenkers (101) angeordnet ist, wobei vorzugsweise der Zwischenteil (105) an einem vorderen Ende, an der Position des Spannverbindungselements (110), sich nach oben erstreckende Vorsprünge aufweist, die auf einer Innenseite der seitlichen Rippen (32) des Längslenkers (101) in Eingriff kommen.

16. Verfahren zum Herstellen eines Längslenkers (1; 101) nach einem der Ansprüche 1-10, wobei:
- ein zylindrischer stabförmiger Rohling in einem ersten Schmiedewerkzeug angeordnet wird;
- der zylindrische Rohling durch Kompression im ersten Schmiedewerkzeug zu einem Zwischenwerkstück verformt wird;
- das Zwischenwerkstück in einem zweiten Schmiedewerkzeug angeordnet wird;
- das Zwischenwerkstück durch Kompression in dem zweiten Schmiedewerkzeug in die endgültige Form des Längslenkers (1; 101) verformt wird.

## Revendications

1. Bras oscillant flexible forgé (1 ; 101) pour une suspension d'essieu à ressort pneumatique d'un véhicule, ledit bras oscillant (1) étant constitué d'un acier à ressort et ayant une partie d'extrémité avant (2) conçue et configurée pour être montée pivotante sur un support de palier de châssis, une partie de fixation d'essieu (4 ; 104) située à une distance longitudinale de la partie d'extrémité avant (2) et conçue pour se fixer contre un corps d'essieu (6), et une partie ressort (3) s'étendant entre la partie d'extrémité avant (2) et la partie de fixation d'essieu (4 ; 104) et formée d'un seul tenant avec celles-ci, **caractérisé en ce que** la partie ressort (3) comprend un profil en forme de canal ayant une paroi supérieure (30) présentant une épaisseur de paroi (*tₜ*), deux parois latérales opposées (31), présentant une épaisseur de paroi (*tₗ*), et un côté ouvert opposé à la paroi supérieure (30) et orienté vers le bas en utilisation, et la partie ressort (3) comprenant en outre des arêtes latérales s'étendant vers l'extérieur (32) formées à l'extrémité des parois latérales (31) contiguës au côté ouvert du profil en forme de canal.

2. Bras oscillant flexible forgé selon la revendication 1, dans lequel les arêtes latérales (32) présentent une hauteur (*tᵣ*) définie par la distance entre un côté supérieur (33) et un côté inférieur (34) de l'arête, ladite hauteur (*tᵣ*) étant supérieure aux épaisseurs de paroi (*tₜ, tₗ*) de la paroi supérieure (30) et des parois latérales (31).

3. Bras oscillant flexible forgé selon la revendication 1 ou 2, dans lequel la partie ressort (3) a un axe neutre adjacent à la partie d'extrémité avant (2) qui est situé au niveau d'un côté supérieur (33) des arêtes latérales (32) et qui dans la direction longitudinale se développe de façon continue jusqu'à un niveau sensiblement au milieu de la hauteur du profil en forme de canal adjacent à la partie de fixation (4 ; 104).

4. Bras oscillant flexible forgé selon l'une quelconque des revendications précédentes, dans lequel :
- le rapport entre l'épaisseur de paroi (*tₜ*) de la paroi supérieure (30) et l'épaisseur de paroi (*tₗ*) des parois latérales (31) de la partie ressort (3) est compris dans la plage de 0,90 ≤ *tₗ* / *tₜ* ≤ 1,60 ; et/ou
- l'arête latérale (32) présente une largeur maximale (*wᵣ*) entre le côté interne de la paroi latérale (31) sur le côté ouvert et un point latéral le plus extérieur de l'arête latérale (32), ladite largeur maximale (*wᵣ*) étant supérieure aux épaisseurs de paroi (*tₜ*) de la paroi supérieure (30) ; et/ou
- les parois latérales (31) s'étendent suivant un angle par rapport à la paroi supérieure (30) d'au moins 90°, de préférence compris entre 96° et 102°.

5. Bras oscillant flexible forgé selon l'une quelconque des revendications 2 à 4, dans lequel les arêtes latérales (32) ont un côté latéral externe (35) qui s'effile depuis le côté supérieur (33) de l'arête latérale (32) vers le côté inférieur (34) de l'arête latérale (32).

6. Bras oscillant flexible forgé selon l'une quelconque des revendications précédentes, dans lequel :
- une portée d'essieu (48) est formée d'un seul tenant dans la partie de fixation d'essieu (4) pour recevoir une section longitudinale du corps d'essieu (6) ; et/ou
- la partie de fixation d'essieu (4) a un profil en forme de canal ayant des arêtes latérales s'étendant vers l'extérieur (42) formées à une extrémité ouverte du profil en forme de canal, dans lequel de préférence, l'extrémité avant de la partie de fixation (4) possède des renfoncements (47) formés sur le côté externe dans le bord entre la paroi supérieure (40) et les parois latérales (41) du profil en forme de canal.

7. Bras oscillant flexible forgé selon l'une quelconque des revendications précédentes, dans lequel :
- la partie ressort (3) présente un profil de largeur variable, dans lequel de préférence, la partie ressort (3) présente un profil de largeur courbe ; et/ou
- les côtés latéraux externes des arêtes latérales (32) définissent un premier profil de largeur variable, dans lequel de préférence, le premier profil de largeur variable est un profil courbe ; et/ou
- des côtés externes des parois latérales (31) définissent un second profil de largeur variable, dans lequel de préférence :
• le second profil de largeur variable est un profil courbe, et/ou
• dans une partie de transition située entre la partie ressort (3) et la partie de fixation (4), le second profil de largeur est plus petit que dans la partie ressort (3) à l'avant de celle-ci.

8. Bras oscillant flexible forgé selon l'une quelconque des revendications précédentes, dans lequel :
- la région d'extrémité avant de la partie de fixation d'essieu (4) est plus large que le reste de la partie de fixation (4) ; et/ou
- à l'extrémité avant de la partie de fixation (4), une ou plusieurs nervures transversales (36) sont formées à l'intérieur du profil entre les parois latérales.

9. Bras oscillant flexible forgé selon l'une quelconque des revendications précédentes, dans lequel le bord forgé, c'est-à-dire le bord formé à l'interface entre des moitiés de matrice de forgeage pendant la fabrication, est situé au niveau des arêtes latérales (32), en particulier au niveau du côté supérieur (33) des arêtes latérales (32).

10. Bras oscillant flexible forgé selon l'une quelconque des revendications précédentes, dans lequel le bras oscillant (101) comprend une partie de bras arrière intégrée à la partie de fixation (104), ladite partie de bras arrière comprenant une partie de montage de ressort pneumatique (111).

11. Ensemble bras oscillant comprenant un bras oscillant (1) selon l'une quelconque des revendications 1 à 9 et comprenant en outre une partie de bras arrière (5) comprenant une partie de fixation (50) ayant une portée d'essieu (51) à positionner à l'opposé de la partie de fixation (4) du bras oscillant (1), et un bras de montage de ressort pneumatique (56) qui s'étend depuis la partie de fixation (50) de la partie de bras arrière (5), dans lequel en utilisation, la partie de fixation (4) du bras oscillant (1) et la partie de fixation (50) de la partie de bras arrière (5) reçoivent un corps d'essieu (6) et sont serrées contre celui-ci au moyen d'une liaison de mise en tension telle qu'un étrier (7, 10) ou des boulons séparés.

12. Ensemble bras oscillant selon la revendication 11, dans lequel :
- la partie de fixation (4) du bras oscillant (1) et la partie de fixation (50) de la partie de bras arrière (5) viennent en prise l'une avec l'autre à une extrémité avant des parties de fixation respectives (4, 50) et sont serrées l'une contre l'autre en une serrure à pêne ; et/ou
- la partie de fixation (50) de la partie de bras arrière (5) a, à une extrémité avant, à l'emplacement de la liaison de mise en tension (7), des saillies s'étendant vers le haut qui viennent en prise sur un côté interne des arêtes latérales (32) du bras oscillant (1).

13. Suspension d'essieu comprenant un bras oscillant ou un ensemble bras oscillant selon l'une quelconque des revendications précédentes, la suspension d'essieu comprenant en outre une plaque à bride (8) ayant des pattes (80) dotées d'alésages respectifs pour les tiges (71) d'un étrier (7) ou de boulons séparés, dans laquelle la plaque à bride (8), dans un état monté, s'étend pardessus le côté supérieur du bras oscillant (1) et est supportée par les arêtes latérales (32) à une extrémité avant de la partie de fixation d'essieu (4).

14. Suspension d'essieu selon la revendication 13, dans laquelle la plaque à bride (8), à une région d'extrémité avant de celle-ci, ne vient pas en prise avec la paroi supérieure (30) du profil en forme de canal de la partie ressort (3), dans laquelle de préférence, la plaque à bride (8), à une région d'extrémité arrière de celle-ci, vient en prise avec la paroi supérieure du profil en forme de canal de la partie de fixation d'essieu (4), en particulier au niveau des renfoncements (47) définis à la revendication 6.

15. Suspension d'essieu comprenant un bras oscillant selon la revendication 10 et comprenant en outre une partie intermédiaire (105) disposée entre le corps d'essieu (6) et la partie de fixation d'essieu (104) du bras oscillant (101), dans laquelle de préférence, la partie intermédiaire (105) a, à une extrémité avant, à l'emplacement de la liaison de mise en tension (110), des saillies s'étendant vers le haut qui viennent en prise sur un côté interne des arêtes latérales (32) du bras oscillant (101).

16. Procédé de fabrication d'un bras oscillant (1 ; 101) selon l'une quelconque des revendications 1 à 10, dans lequel :
- une pièce brute en forme de tige cylindrique est disposée dans une première matrice de forgeage ;
- la pièce brute cylindrique est déformée en une pièce de travail intermédiaire par compression dans la première matrice de forgeage ;
- la pièce à travailler intermédiaire est disposée dans une seconde matrice de forgeage ;
- la pièce à travailler intermédiaire est déformée selon la forme finale du bras oscillant (1 ; 101) par compression dans la seconde matrice de forgeage.
